# FASCICULE DE BREVET EUROPEEN

(11) **EP 1 987 658 B1**
(45) Date de publication et mention de la délivrance du brevet: **22.07.2009**
(21) Numéro de dépôt: 07731620.6
(22) Date de dépôt: 13.02.2007
(51) Int. Cl.: H04L 29/08, H04L 12/24, H04L 12/26, H04L 29/06

(54) **PROCEDE DE GESTION DE CHARGE D'UN SERVEUR**
VERFAHREN ZUR SERVERLASTVERWALTUNG
METHOD FOR MANAGING A SERVER LOAD

(30) Priorité: 24.02.2006 FR 0650639
(43) Date de publication de la demande: 05.11.2008
(73) Titulaire: FRANCE TELECOM, 75015 Paris (FR)
(72) Inventeur: MASCHIO-ESPOSITO, Eric, F-14790 Fontaine-Etoupefour (FR); LAPEYRONIE, Serge, F-87000 Limoges (FR); BRAULT, Sébastien, F-22560 Pleumeur-Bodou (FR)
(86) Numéro de dépôt international: PCT/FR2007/050795
(87) Numéro de publication internationale: WO 2007/096555

(56) Documents cités:
- US-A1- 2003 074 453
- US-B1- 6 314 565
- SURYANARAYANAN K ET AL: "Performance evaluation of new methods of automatic redirection for load balancing of apache servers distributed in the internet" LOCAL COMPUTER NETWORKS, 2000. LCN 2000. PROCEEDINGS. 25TH ANNUAL IEEE CONFERENCE ON NOVEMBER 8-10, 2000, PISCATAWAY, NJ, USA,IEEE, 8 novembre 2000 (2000-11-08), pages 644-651, XP010527500 ISBN: 0-7695-0912-6
- CARTER R ET AL: "Detecting timed-out client requests for avoiding livelock and improving web server performance" COMPUTERS AND COMMUNICATIONS, 2000. PROCEEDINGS. ISCC 2000. FIFTH IEEE SYMPOSIUM ON JULY 3-6, 2000, PISCATAWAY, NJ, USA,IEEE, 3 juillet 2000 (2000-07-03), pages 2-7, XP010505317 ISBN: 0-7695-0722-0

## Description

L'invention concerne un procédé de gestion de charge d'un serveur apte à traiter les requêtes émises via un réseau de télécommunication par une pluralité de terminaux.

Dans le domaine des réseaux publics, les serveurs de traitement de données sont dimensionnés pour être capables de traiter un nombre important de requêtes en provenance de terminaux distants. C'est le cas par exemple des serveurs de site WEB qui sont dimensionnés en fonction d'une estimation de l'activité moyenne que génère le
ou les sites gérés par ce serveur.

Or, quelle que soit la capacité de traitement d'un serveur, subsiste néanmoins le risque que le nombre de requêtes à traiter dépasse pendant une période de temps très courte la capacité du serveur. Une telle situation entraîne le plus souvent un effondrement des performances du serveur, celui-ci n'étant plus en mesure de répondre aux nouvelles requêtes. Les requêtes sont alors soit rejetées avec un code d'erreur, soit redirigées vers un serveur tampon qui retourne une page d'information indiquant sans plus de précision que le serveur ne peut accepter une nouvelle connexion et qu'il serait bon que l'utilisateur se reconnecte ultérieurement.

Dans d'autres cas enfin, les temps de réponse sont tellement longs que l'internaute effectue en vain plusieurs tentatives pour accéder à une page du site WEB, ce qui a pour conséquence d'augmenter le nombre de requêtes à traiter par le serveur et donc d'allonger encore plus les temps de réponse à une requête d'accès à ce site WEB.

Différentes techniques ont été élaborées pour répondre à ces problèmes, par exemple les techniques de répartition de charge (ou "load balancing" selon la dénomination anglaise). Dans une telle approche, un équipement du réseau est chargé de répartir la charge sur un ensemble de serveurs qui lui est associé:
- soit il affecte une requête à un serveur différent à chaque nouvelle requête, les serveurs étant sélectionnés à tour de rôle pour cette affectation,
- soit il attend qu'un serveur atteigne un seuil de charge prédéfini pour affecter les nouvelles requêtes au serveur suivant dans sa liste de serveurs.

Cependant de telles solutions ne permettent pas, en cas de surcharge globale de l'ensemble des serveurs, de garantir qu'une requête sera traitée normalement, ni même de garantir un délai de traitement des requêtes. En outre, pour des raisons de coût, un surdimensionnement excessif des serveurs permettant de gérer des situations de charge exceptionnelle est rarement envisageable.

Dans le document SURYANARAYANAN K ET AL: "Performance evaluation of new methods of automatic redirection for load balancing of apache servers distributed in the internet" LOCAL COMPUTER NETWORKS, 2000. LCN 2000. PROCEEDINGS: 25TH ANNUAL IDEEE CONFERENCE ON NOVEMBER 8-10, 2000, PISCATAWAY, NJ, USA,IEEE, 8 novembre 2000 (2000-11-08), pages 644-651, XP010527500 ISBN: 0-7695-0912-6 les auteurs développent et évaluent des changements en serveur http Open source Apache pour rediriger automatiquement des requêtes durant des périodes de forte charge vers un serveur de surcharge préspécifié.

L'invention a pour but de fournir un procédé de gestion de charge d'un serveur apte à traiter les requêtes émises via un réseau de télécommunication par une pluralité de terminaux, permettant de gérer à moindre coût les situations de surcharge ponctuelles de ce serveur, garantissant notamment la prise en compte de la requête ainsi que le délai dans lequel cette requête sera prise en compte.

Dans ce but, l'invention a pour objet, selon un premier aspect, un procédé de gestion de charge d'au moins un serveur apte à traiter des requêtes émises *via* un réseau de télécommunication par une pluralité de terminaux, le procédé comprenant au moins:
- une étape de réception par le serveur d'une requête en provenance d'un terminal,
- une étape d'obtention d'une valeur d'estimation d'une charge du serveur,
- une étape d'envoi, vers ledit terminal, de données destinées à provoquer une réémission automatique par ledit terminal et vers ledit serveur de ladite requête à une date ultérieure, fonction d'une prévision relative à la charge du serveur, ladite étape d'envoi étant exécutée si ladite valeur d'estimation est supérieure à une valeur de seuil.

Selon l'invention, il est prévu, en cas de surcharge du serveur, de reporter le traitement d'une requête à une date ultérieure, en provoquant la réémission automatique de la requête à cette date ultérieure. De ce fait il est possible de garantir à l'utilisateur émetteur de la requête que sa requête sera automatiquement prise en compte et traitée ultérieurement, notamment lorsque la charge du serveur le permettra. En outre, l'utilisateur termine normalement et sans message d'erreur sa session de consultation du serveur.

L'invention permet de réguler la charge d'un serveur par une meilleure répartition dans le temps du traitement des requêtes. Les surcharges ponctuelles du serveur sont ainsi anticipées et évitées. En outre l'invention est utilisable en combinaison avec les solutions de régulation de charge connus, notamment avec les mécanismes précités de répartition de charge entre plusieurs serveurs.

Selon un mode de réalisation particulier, les données sont destinées à provoquer un déclenchement d'une temporisation ayant une durée correspondant à une estimation d'un délai d'attente avant une prise en compte de la requête, cette estimation étant fonction d'une prévision relative à la charge du serveur, la réémission automatique ayant lieu à expiration de la temporisation.

La date de réémission de la requête découle ainsi de la durée de temporisation.
Cette méthode simplifie la programmation de la réémission de la requête, puisqu'il suffit de déterminer une durée d'attente prévisible avant la prise en compte et le traitement de la requête et de déclencher une temporisation ayant cette durée.

Selon un mode de réalisation particulier, les données sont destinées à provoquer un affichage sur ledit terminal dudit délai d'attente estimé, la temporisation étant déclenchée sous condition d'acceptation dudit délai par un utilisateur du terminal.

De la sorte, la durée d'attente est communiquée à l'utilisateur du terminal émetteur de la requête. L'utilisateur est ainsi avisé du problème de charge et de la durée d'attente à prévoir. Il peut donc soit mettre à profit son délai d'attente pour effectuer d'autres tâches, soit renoncer à se connecter.

L'internaute peut accepter ou refuser le délai d'attente, et lorsqu'il l'accepte, bénéficie de la garantie d'être reconnecté automatiquement.

Selon un mode de réalisation particulier, les données générées par le serveur comprennent un témoin d'émission destiné à être inséré dans la requête lors de sa réémission par le terminal.

Le témoin d'émission permet au serveur de savoir si une requête qu'il reçoit est une requête qui a déjà été émise précédemment et qui fait l'objet d'une réémission. La gestion des requêtes réémises est donc possible grâce à ce témoin.

Selon un mode de réalisation particulier, les données générées par le serveur comprennent une information sur une date de première réception de ladite requête, ladite information étant destinée à être insérée dans ladite requête lors de sa réémission.

L'horodatage des requêtes permet au serveur de traiter les requêtes réémises par ordre chronologique relativement à la date de la première tentative de connexion. Cette information de date est ainsi utile pour la bonne prise en compte d'une requête avec témoin d'émission.

L'invention a également pour objet un programme d'ordinateur comprenant des instructions de code de programme pour l'exécution des étapes du procédé selon l'invention lorsque ledit programme est exécuté sur un ordinateur.

Selon un deuxième aspect, l'invention a pour objet un serveur de traitement apte à traiter les requêtes émises via un réseau de télécommunication par une pluralité de terminaux, le serveur comprenant :
- des moyens pour recevoir une requête en provenance d'un terminal,
- des moyens pour obtenir une valeur d'estimation d'une charge du serveur,
- des moyens pour, lorsque ladite valeur d'estimation est supérieure à une valeur de seuil, envoyer audit terminal des données destinées à provoquer une réémission automatique, par ledit terminal et vers ledit serveur, de ladite requête à une date ultérieure, fonction d'une prévision relative à la charge du serveur.

Selon un mode de réalisation particulier, le serveur selon l'invention comprend,
- des moyens pour déterminer, à réception d'une requête, si elle contient un témoin d'émission,
- des moyens pour traiter les requêtes comprenant un témoin d'émission de manière prioritaire par rapport à celles n'en contenant pas.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 comprend un schéma d'une configuration de système de télécommunication à laquelle s'applique l'invention;
- la figure 2 illustre par un diagramme le fonctionnement et les performances du procédé selon l'invention.
- la figure 3 comprend un organigramme du procédé selon l'invention.

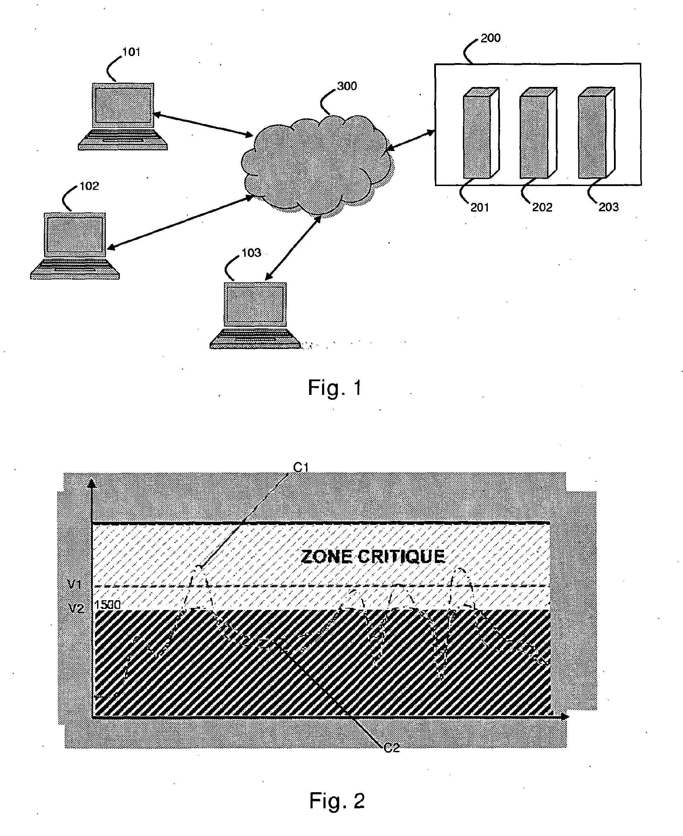

Le système de télécommunication représenté à la figure 1 comporte une pluralité de terminaux 101, 102, 103 aptes à émettre via le réseau de télécommunication 300 des requêtes vers un ensemble formant serveur 200 comprenant une ou plusieurs machines serveurs 201, 202, 203.

Le réseau de télécommunication 300 est par exemple le réseau Internet, un réseau cellulaire de type UMTS (Universal Mobile Télécommunication System), ou tout autre type de réseau de télécommunication apte à transmettre des données sous forme de requêtes.

Les terminaux 101, 102, 103 sont par exemple des ordinateurs personnels, des téléphones de troisième génération, des assistants personnels (PDA, Personal Digital Assistant) ou tout autre type de terminal apte à émettre des requêtes vers un serveur. Ces terminaux accèdent au réseau de télécommunication 300.

Dans la suite de la description, l'invention est décrite dans un mode de réalisation dans lequel les terminaux 101, 102, 103 sont des terminaux accédant au réseau Internet, le serveur 200 étant un serveur de site WEB traitant les requêtes émises par les terminaux lors de sessions de consultation du ou des sites WEB associés au serveur 200.

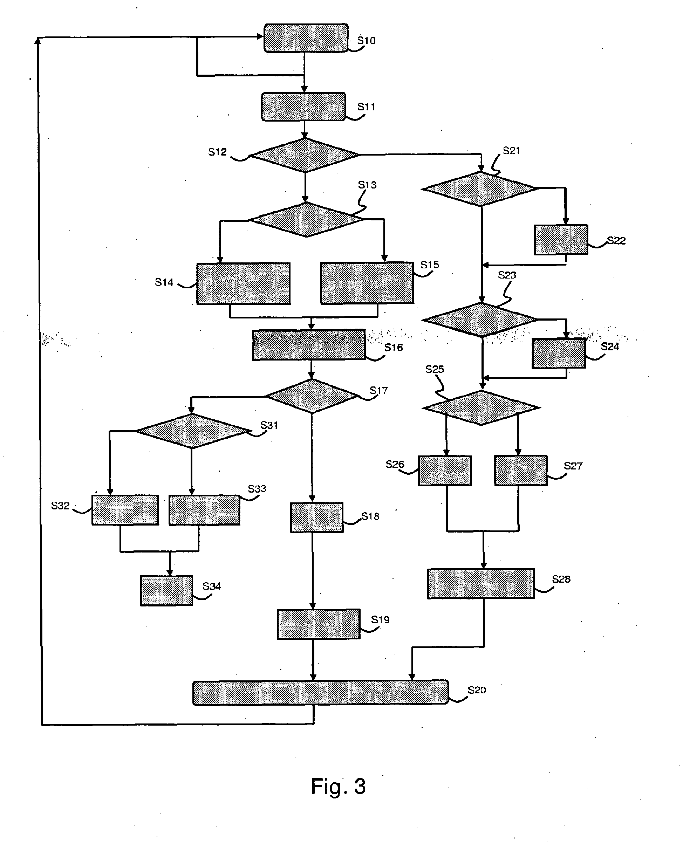

Les étapes S10 à S34 du procédé selon l'invention sont décrites en détail par référence à la figure 3. Ces étapes sont de préférence mises en oeuvre par un processeur de traitement de données du serveur, processeur faisant appel à des programmes ou sous-programmes conçus pour l'exécution des différentes étapes de ce procédé.

A l'étape S10, le serveur 200 est en attente via une interface de communication d'une requête en provenance d'un des terminaux 101, 102, 103. A l'étape S11, le serveur 200 reçoit une requête.

A l'étape S12, le serveur 200 obtient une estimation de la charge. Cette estimation est par exemple le nombre moyen de requêtes reçues par seconde ou le nombre moyen de nouvelles sessions utilisateur ouvertes par seconde, le pourcentage de temps CPU couramment utilisé, etc. Elle est donc relative soit au volume de trafic géré par le serveur, soit à un taux de charge, taux qui est mesuré par exemple comparativement à sa capacité de traitement. Cette estimation est déterminée par un module logiciel de supervision de la charge du serveur, module mis en oeuvre par le serveur lui-même ou par un autre serveur coopérant avec le serveur 200.

Si la valeur de cette estimation est supérieure à un seuil, le serveur 200 exécute l'étape S13, sinon il exécute l'étape S21. Le seuil est par exemple défini à partir de la charge critique maximale pouvant être absorbée par le serveur par unité de temps. Cette charge est la charge au-delà de laquelle le serveur n'est plus en mesure de travailler avec des temps de réponses satisfaisant. De préférence le seuil est inférieur à la charge critique maximale, afin d'anticiper sur l'apparition de la charge critique. Le seuil est choisi par exemple égal à 90% de cette charge critique maximale.

A l'étape S13, le serveur teste si, dans les paramètres de la requête reçue se trouve un témoin d'émission. La présence d'un témoin d'émission dans une requête permet de déterminer qu'il s'agit d'une requête qui a déjà été émise, et qui a fait l'objet d'une réémission conformément au procédé selon l'invention. Un tel témoin d'émission a été généré par le serveur et transmis au terminal afin d'être inséré dans la requête lors de sa réémission.

Un témoin d'émission se présente sous la forme d'un ensemble de données. Cet ensemble de données comprend au moins un identifiant de témoin d'émission, de préférence sous la forme d'une combinaison alphanumérique, unique et non falsifiable.

Le témoin d'émission comprend de préférence une indication d'un délai d'attente associé au témoin d'émission, exprimé en secondes ou minutes, ainsi que la date à laquelle la requête a été reçue pour la première fois par le serveur.

Le témoin d'émission joue en quelque sorte le rôle d'un ticket d'attente, attestant qu'une requête a déjà été émise. Il permet de marquer la requête émise et donne des informations sur la date d'émission et le délai d'attente programmé. Il permet donc la gestion de l'attente programmée pour une requête.

Ces données sont identifiables parmi les autres paramètres de la requête au moyen de balises, symboles, caractères spécifiques ou mots clefs, tels que ceux utilisés dans le codage des paramètres des URL. Dans l'exemple ci-dessous, l'identifiant du témoin d'émission '45ft672345FR6' est repérable dans l'URL au moyen du mot clef 'ticketweb':
http://www.korigan.univ.fr/inscript/ticketweb=45ft672345FR6t.

Dans la logique d'utilisation des URL, l'activation d'un tel lien provoque l'envoi de l'identifiant et du mot clef associé au serveur WEB gérant les requêtes du site www.korigan.univ.fr.

Le délai d'attente associé à un témoin d'émission correspond à la période de temps nécessaire au serveur pour terminer le traitement des sessions de communication en cours et pour traiter les sessions de communication des requêtes ayant, déjà été mises en attente. Ce délai est estimé sur la base d'une prévision de la charge du serveur. Cette prévision de charge est par exemple en fonction du nombre de sessions de communication en cours, de la durée moyenne d'une session de communication, du nombre de requêtes ayant été mises en attente et des délais de mise en attente programmés pour ces requêtes. Le serveur comprend ainsi un module d'analyse statistique apte à calculer les paramètres pertinents et à actualiser régulièrement ces paramètres.

Lors de l'étape S14 ou S15 exécutée suite à l'étape S13, le serveur estime le délai d'attente pour le traitement de la requête sur la base de prévisions de charge du serveur.

Si à l'étape S13 la requête ne contient pas de témoin d'émission, le serveur génère à l'étape S14 un témoin d'émission pour cette requête puis exécute l'étape S16.

Si à l'étape S13 la requête contient un témoin d'émission, le serveur procède à l'étape S15 à la mise à jour du témoin d'émission, en remplaçant le délai d'attente prévu initialement par un nouveau délai. Le serveur exécute ensuite l'étape S16.

A l'étape S16, le serveur envoie au terminal en réponse à la requête reçue un ensemble de données, sous la forme d'une page HTML, destinée à provoquer l'affichage sur le terminal d'une fenêtre de dialogue. Cette fenêtre de dialogue permet à la fois d'afficher le délai d'attente déterminé et de proposer à l'utilisateur du terminal des options pour le traitement de la requête:
- une première option correspondant à l'acceptation du délai d'attente assortie d'une réémission automatique de la requête à l'expiration du délai d'attente;
- une deuxième option correspondant à la demande de réémission de la requête à une date ultérieure à choisir par l'utilisateur;
- une troisième option correspondant à l'abandon de la tentative de connexion.

La fenêtre de dialogue présente donc des éléments de dialogue, par exemple sous forme de boutons, icones, liens hypertexte, etc, via lesquels l'utilisateur est invité à sélectionner l'option choisie. Lorsque l'utilisateur clique sur un de ces éléments pour sélectionner une des options, une information relative à l'option choisie étant communiquée au serveur. Le serveur analyse cette information, la mémorise et en tient compte pour ses prévisions de charge.

A l'étape S17 le serveur détermine sur la base de l'information reçue si l'utilisateur a accepté le délai d'attente.

Dans l'affirmative, le serveur renvoie au terminal à l'étape S18 une page HTML comportant des données de programme, typiquement sous forme de script en langage Java, destinées à provoquer l'exécution d'un programme sur le terminal.

A l'étape S19, le script s'exécute et provoque le déclenchement d'une temporisation dont la durée correspond au délai d'attente estimé pour le traitement de la requête. A l'expiration de la temporisation, le script provoque la reconnexion automatique sur le site du serveur par la réémission automatique de la requête vers le serveur, cette requête réémise comportant le témoin d'émission nouvellement généré (cas de l'étape S14) ou mis à jour (cas de l'étape S15).

Le script peut utiliser l'une des deux méthodes suivantes pour lancer la reconnexion sur le site:
- soit il envoie une commande HTTP de type "redirect" sur une URL enrichie comprenant les données d'un témoin d'émission,
- soit il envoie une commande HTTP de type "post" pour renvoyer un formulaire contenant les paramètres du témoin d'émission.

Dans les deux cas, la procédure de reconnexion est transparente pour l'utilisateur qui se retrouvera après le délai d'expiration automatiquement connecté sur le site Internet.

Après l'étape S19, le procédé se termine à l'étape S20. Après l'étape S20, le procédé reprend à l'étape S10.

A l'étape S31, exécutée suite à l'étape S17 dans le cas où l'utilisateur a refusé le délai d'attente, le serveur détermine si l'utilisateur a demandé la réémission de la requête à une date ultérieure.

Dans la négative, le serveur invite à l'étape S32 l'utilisateur à se reconnecter ultérieurement. La session de communication entre le terminal et le serveur se termine alors par une déconnexion HTTP à l'étape S34, ce qui a pour effet de libérer les ressources du serveur pour le traitement d'autres requêtes.

Dans l'affirmative, à l'étape S33, le serveur envoie un message électronique avec les données permettant la reconnexion. Ces données sont de préférence sous la forme d'une URL comportant, dans les données optionnelles, un témoin d'émission comprenant au moins un identifiant de témoin d'émission. Ainsi, lorsque l'utilisateur demande une connexion en utilisant l'URL ainsi constituée, les données optionnelles sont transmises au serveur avec la requête et le serveur est en mesure de déterminer qu'il s'agit d'une requête réémise. La session de communication entre le terminal et le serveur se termine ensuite par une déconnexion HTTP à l'étape S34.

L'étape S21 est exécutée suite au test de l'étape S12 lorsque la charge du serveur ne dépasse par le seuil défini. Lors de l'étape S21, le serveur détermine si la requête qu'il vient de recevoir comprend un témoin d'émission.

Dans l'affirmative, le serveur supprime à l'étape S22 ce témoin d'émission et affecte à la requête un identifiant de session de communication prioritaire. Un tel identifiant est utilisé pour indiquer que la requête doit être traitée en priorité par rapport à d'autres requêtes ne comportant qu'un simple identifiant de session de communication. Dans le contexte de l'invention, les identifiants de session de communication prioritaire se distinguent des autres par exemple par la plage de valeur dans laquelle ils se trouvent.

A l'étape S23, le serveur détermine si la requête comprend un identifiant de session, et dans la négative affecte, lors de l'étape S24, un tel identifiant à la requête.

A l'étape S25, le serveur poursuit le traitement de la requête, selon le protocole usuellement utilisé. Ainsi une négociation est possible pour déterminer si la suite du traitement doit se dérouler en utilisant le protocole HTTP (étape S26) ou via une nouvelle session de communication impliquant l'utilisation du protocole HTTPS (étape S27). La présence d'un identifiant de session de communication prioritaire ne modifie pas l'exécution des étapes S25, S26, S27 par rapport à une situation sans identifiant prioritaire.

Le traitement de la requête se poursuit ensuite à étape S28, lors de laquelle le serveur détermine sur la base de l'identifiant de session de communication s'il s'agit d'une requête prioritaire ou non, et traite en priorité les requêtes comportant un identifiant de session de communication prioritaire.

L'information de date associée au témoin d'émission est utilisable de plusieurs manières.

Selon une première variante, cette information est utilisée lors du traitement de la requête, ce traitement étant en fonction de la date de première connexion. Cette variante est particulièrement utile pour des opérations en ligne pour lesquelles une date limite est imposée, par exemple une déclaration de revenus ou inscription auprès d'une université. Dans ce type de situation, on assiste en effet fréquemment à un engorgement du serveur peu avant l'expiration de la date limite imposée. L'invention permet donc d'admettre des connexions postérieures à la date limite imposée, dans la mesure où il s'agit d'une réémission automatique d'une requête qui a été émise pour la première fois avant la date limite imposée. L'information de date associée au témoin d'émission est de préférence encodée de manière non infalsifiable de manière à éviter toute fraude possible.

Selon une deuxième variante l'information de date associée au témoin d'émission permet au serveur de gérer les requêtes prioritaires par ordre chronologique de réception, relativement à la date de première tentative de connexion. Dans cette variante les requêtes sont sérialisées dans une file d'attente. Ainsi lorsque la requête d'un utilisateur est placée dans la file d'attente, l'utilisateur sait, qu'au bout du délai d'attente que le serveur lui a signifié, il aura accès en priorité aux services proposés par ce serveur, la reconnexion étant effectuée de manière transparente et totalement automatisée.

L'invention permet ainsi de décaler dans le temps et de planifier les requêtes à destination reçues par un serveur alors que ce dernier atteint ou est proche de sa charge critique maximale.

Le graphique de la figure 2 illustre l'efficacité du système de génération de témoin d'émission. Ce graphique comporte deux courbes C1 et C2 de variation de la charge du serveur en fonction du temps. La courbe C1, obtenue pour un serveur ne mettant pas en oeuvre l'invention, montre un fort pic dans la zone des valeurs de charge supérieure à une valeur critique maximale V1. Ce pic se traduit par une forte dégradation de service.

La courbe C2 montre la variation de charge obtenue pour un serveur mettant en oeuvre l'invention pour un nombre de requêtes et une répartition identiques à ceux de la courbe C1. Dans ce cas, dès que la charge du serveur atteint la valeur V2, le serveur déclenche le procédé selon l'invention et la génération de témoin d'émission. Il en résulte que la courbe C2 dépasse à peine la valeur de seuil V2, et n'atteint jamais la valeur de seuil critique V1. Le pic de charge est absorbé sur une large période de temps.

Selon une implémentation préférée, les différentes étapes du procédé de gestion de charge sont exécutées au moyen d'instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre d'un procédé de gestion de charge tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionne ci-dessus

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention permet d'obtenir un effet de lissage de la courbe de charge. Malgré une légère augmentation du nombre de requêtes à traiter, la répartition dans le temps de la charge du serveur est grandement améliorée, toutes les variations brusques de trafic étant absorbées en souplesse.

L'invention est applicable à tout type de serveur, quel que soit le type des requêtes traitées.

## Revendications

1. Procédé de gestion de charge d'au moins un serveur apte à traiter des requêtes émises *via* un réseau de télécommunication par une pluralité de terminaux, tel qu'il comprend au moins:
- une étape de réception (S11) par le serveur d'une requête en provenance d'un terminal,
- une étape d'obtention d'une valeur d'estimation d'une charge du serveur,
- une étape d'envoi (S14, S16, S18), vers ledit terminal, de données aptes à provoquer une réémission automatique, par ledit terminal et vers ledit serveur, de ladite requête à une date ultérieure, fonction d'une prévision relative à la charge du serveur, ladite étape d'envoi étant exécutée si ladite valeur d'estimation est supérieure à une valeur de seuil.

2. Procédé selon la revendication 1, dans lequel lesdites données sont destinées à provoquer un déclenchement (S19) d'une temporisation ayant une durée correspondant à une estimation d'un délai d'attente avant une prise en compte de la requête, ladite estimation étant fonction d'une prévision relative à la charge du serveur, ladite réémission automatique ayant lieu à expiration de ladite temporisation.

3. Procédé selon la revendication 2, dans lequel lesdites données sont destinées à provoquer un affichage sur ledit terminal dudit délai d'attente estimé, ladite temporisation étant déclenchée sous condition d'acceptation dudit délai par un utilisateur du terminal.

4. Procédé selon l'une quelconque des revendications 1 à 3, dans lequel lesdites données comprennent un témoin d'émission destiné à être inséré dans ladite requête lors de sa réémission par ledit terminal.

5. Procédé selon l'une quelconque des revendications 1 à 4, dans lequel lesdites données comprennent une information sur une date de première réception de ladite requête, ladite information étant destinée à être insérée dans ladite requête lors de sa réémission par ledit terminal.

6. Procédé selon la revendication selon l'une quelconque des revendications 4 ou 5, dans lequel;
- le serveur détermine (S13, S21), à réception d'une requête, si elle contient un témoin d'émission,
- le serveur traite (S28) les requêtes comprenant un témoin d'émission de manière prioritaire par rapport à celles n'en contenant pas.

7. Procédé selon la revendication 6, dans lequel le serveur traite les requêtes réémises comprenant un témoin d'émission par ordre chronologique de réception sur la base de ladite information de date.

8. Programme d'ordinateur comprenant des instructions de code de programme pour l'exécution de toutes les étapes du procédé selon les revendications 1 à 7 lorsque ledit programme est exécuté sur un ordinateur.

9. Serveur de traitement apte à traiter les requêtes émises via un réseau de télécommunication par une pluralité de terminaux, tel qu'il comprend :
- des moyens pour recevoir (S11) une requête en provenance d'un terminal,
- des moyens pour obtenir une valeur d'estimation d'une charge du serveur,
- des moyens pour, lorsque ladite valeur d'estimation est supérieure à une valeur de seuil, envoyer (S14, S16, S18) audit terminal des données destinées à provoquer une réémission automatique, par ledit terminal et vers ledit serveur de ladite requête à une date ultérieure, fonction d'une prévision relative à la charge du serveur.

10. Serveur selon la revendication 9, comprenant,
- des moyens pour déterminer (S13, S21), à réception d'une requête, si elle contient un témoin d'émission,
- des moyens pour traiter (S28) les requêtes comprenant un témoin d'émission de manière prioritaire par rapport à celles n'en contenant pas.

## Claims

1. Method for managing the loading of at least one server able to process requests sent via a telecommunication network by a plurality of terminals, such that it comprises at least:
- a step (S11) of the server receiving a request originating from a terminal,
- a step of obtaining an estimation value of a loading of the server,
- a step (S14, S16, S18) of dispatching, to said terminal, data able to bring about an automatic resending, by said terminal and to said server, of said request at a later date, dependent on a forecast relating to the loading of the server, said dispatching step being executed if said estimation value is above a threshold value.

2. Method according to Claim 1, in which said data are intended to bring about a triggering (S19) of a timeout having a duration corresponding to an estimation of a standby timescale before the request is taken into account, said estimation being dependent on a forecast relating to the loading of the server, said automatic resending taking place on expiry of said timeout.

3. Method according to Claim 2, in which said data are intended to bring about a displaying on said terminal of said estimated standby timescale, said timeout being triggered on condition that said timescale is accepted by a user of the terminal.

4. Method according to any one of Claims 1 to 3, in which said data comprise a send evidence intended to be inserted into said request during its resending by said terminal.

5. Method according to any one of Claims 1 to 4, in which said data comprise an information cue about a date of first receipt of said request, said information cue being intended to be inserted into said request during its resending by said terminal.

6. Method according to either of Claims 4 and 5, in which,
- the server determines (S13, S21), on receipt of a request, whether it contains a send evidence,
- the server processes (S28) the requests comprising a send evidence in a priority manner with respect to those not containing one.

7. Method according to Claim 6, in which the server processes the resent requests comprising a send evidence in chronological order of receipt on the basis of said date information cue.

8. Computer program comprising program code instructions for executing all the steps of the method according to Claims 1 to 7 when said program is executed on a computer.

9. Processing server able to process the requests sent via a telecommunication network by a plurality of terminals, such that it comprises:
- means for receiving (S11) a request originating from a terminal,
- means for obtaining an estimation value of a loading of the server,
- means for, when said estimation value is above a threshold value, dispatching (S14, S16, S18) to said terminal data intended to bring about an automatic resending, by said terminal and to said server, of said request at a later date, dependent on a forecast relating to the loading of the server.

10. Server according to Claim 9, comprising,
- means for determining (S13, S21), on receipt of a request, whether it contains a send evidence,
- means for processing (S28) the requests comprising a send evidence in a priority manner with respect to those not containing one.

## Patentansprüche

1. Verfahren zur Lastverwaltung mindestens eines Servers, der Anfragen verarbeiten kann, die von mehreren Endgeräten über ein Telekommunikationsnetz gesendet werden, derart, dass es mindestens aufweist:
- einen Schritt des Empfangs (S11) einer Anfrage von einem Endgerät durch den Server,
- einen Schritt des Erhalts eines Schätzwerts einer Last des Servers,
- einen Schritt des Sendens (S14, S16, S18) von Daten zum Endgerät, die eine automatische Wiederaussendung der Anfrage vom Endgerät und an den Server zu einem späteren Zeitpunkt bewirken können, abhängig von einer Prognose bezüglich der Last des Servers, wobei der Schritt des Sendens ausgeführt wird, wenn der Schätzwert größer als ein Schwellwert ist.

2. Verfahren nach Anspruch 1, bei dem die Daten dazu bestimmt sind, ein Auslösen (S19) einer Verzögerung zu bewirken, die eine Dauer entsprechend einer Schätzung einer Wartezeit vor einer Berücksichtigung der Anfrage hat, wobei die Schätzung von einer Prognose bezüglich der Last des Servers abhängt, wobei die automatische Wiederaussendung nach Ablauf der Verzögerung erfolgt.

3. Verfahren nach Anspruch 2, bei dem die Daten dazu bestimmt sind, eine Anzeige der geschätzten Wartezeit auf dem Endgerät zu bewirken, wobei die Verzögerung unter der Bedingung der Annahme der Wartezeit durch einen Benutzer des Endgeräts ausgelöst wird.

4. Verfahren nach einem der Ansprüche 1 bis 3, bei dem die Daten einen Sende-Beweis enthalten, das dazu bestimmt ist, bei ihrer Wiederaussendung durch das Endgerät in die Anfrage eingefügt zu werden.

5. Verfahren nach einem der Ansprüche 1 bis 4, bei dem die Daten eine Information über ein erstes Empfangsdatum der Anfrage enthalten, wobei die Information dazu bestimmt ist, bei ihrer Wiederaussendung durch das Endgerät in die Anfrage eingefügt zu werden.

6. Verfahren nach einem der Ansprüche 4 oder 5, bei dem:
- der Server bei Empfang einer Anfrage feststellt (S13, S21), ob sie einen Sende-Beweis enthält,
- der Server die ein Sende-Beweis enthaltenden Anfragen prioritär bezüglich derjenigen behandelt (S28), die keins enthalten.

7. Verfahren nach Anspruch 6, bei dem der Server die einen Sende-Beweis enthaltenden, wiederausgesendeten Anfragen in zeitlicher Empfangsreihenfolge auf der Basis der Datumsinformation verarbeitet.

8. Computerprogramm, das Programmcodeanweisungen zur Ausführung aller Schritte des Verfahrens nach den Ansprüchen 1 bis 7, wenn das Programm auf einem Computer ausgeführt wird, enthält.

9. Verarbeitungsserver, der die von mehreren Endgeräten über ein Telekommunikationsnetz gesendeten Anfragen verarbeiten kann, derart, dass er enthält:
- Einrichtungen, um eine von einem Endgerät kommende Anfrage zu empfangen (S11),
- Einrichtungen, um einen Schätzwert einer Last des Servers zu erhalten,
- Einrichtungen um, wenn der Schätzwert höher ist als ein Schwellwert, an das Endgerät Daten zu senden (S14, S16, S18), die dazu bestimmt sind, eine automatische Wiederaussendung der Anfrage durch das Endgerät und an den Server zu einem späteren Zeitpunkt zu bewirken, abhängig von einer Prognose bezüglich der Last des Servers.

10. Server nach Anspruch 9, der enthält:
- Einrichtungen, um bei Empfang einer Anfrage festzustellen (S13, S21), ob sie einen Sende-Beweis enthält,
- Einrichtungen, um die einen Sende-Beweis enthaltenden Anfragen prioritär bezüglich derjenigen zu verarbeiten (S28), die keiner enthalten.
